# EUROPEAN PATENT SPECIFICATION

(11) **EP 4 324 724 B1**
(45) Date of publication and mention of the grant of the patent: **10.09.2025**
(21) Application number: 22211406.8
(22) Date of filing: 05.12.2022
(51) Int. Cl.: B62D 5/04, H02P 6/16

(54) **MOTOR DRIVEN POWER STEERING SYSTEM OF REDUNDANCY STRUCTURE**
MOTORGETRIEBENES SERVOLENKSYSTEM MIT REDUNDANZSTRUKTUR
SYSTÈME DE DIRECTION ASSISTÉE MOTORISÉ À STRUCTURE REDONDANTE

(30) Priority: 18.08.2022 KR 20220103311
(43) Date of publication of application: 21.02.2024
(73) Proprietor: Hyundai Mobis Co., Ltd., Gangnam-gu Seoul 06141 (KR)
(72) Inventor: YOO, Ho Jun, 16891 Yongin-si (KR); PARK, Yun Yeong, 16891 Yongin-si (KR); KIM, Dong Hyun, 16891 Yongin-si (KR); YOO, Sung Bem, 16891 Yongin-si (KR)
(74) Representative: Frenkel, Matthias Alexander

(56) References cited:
- EP-A1- 3 466 795
- US-A1- 2020 353 975

## Description

### BACKGROUND

### FIELD

Embodiments of the present disclosure relate to a motor driven power steering system of a redundancy structure, and more particularly, to a motor driven power steering system of a redundancy structure in which a driving motor for redundant driving of the motor driven power steering system is independently controlled through a redundant circuit.

### DISCUSSION OF THE BACKGROUND

In general, a motor driven power steering system (MDPS) may provide auxiliary torque in a direction in which a driver of a vehicle steers a wheel by using an electric motor, thereby making the driver's wheel handling lighter.

Unlike a conventional hydraulic power steering (HPS) system, the motor driven power steering system may have improved steering performance and steering feel by automatically controlling an operation of the electric motor based on a driving condition of the vehicle.

Here, the motor driven power steering system may determine the driving condition of the vehicle by including a torque sensor that measures the driver's steering torque input to the steering wheel, a steering angle sensor that measures a steering angle of the steering wheel, and a vehicle speed sensor that measures a vehicle speed.

As such, the motor driven power steering system may be a major system that greatly affects steering safety of the vehicle, and reliable and safe driving of the motor driven power steering system may be an essential element for a safe operation of the vehicle.

A driving motor used in the motor driven power steering system may include a direct current (DC) motor or an alternating current (AC) motor. In case of a conventional three-phase brushless AC motor, a study on a double winding motor to which double winding is applied is being actively conducted for a more reliable operation of the driving motor.

The double winding motor may include two or more power supplies, and may be a motor designed to drive the motor only by inputting power to the remaining power supply even if a motor element or motor winding connected to any one of the two or more power supplies fails or breaks.

Meanwhile, the double winding motor may implement a redundancy structure of the motor, thereby improving the safe and reliable driving of the motor.

Therefore, there has been a need to improve the safe and reliable driving of the motor through the redundancy structure by applying such a double winding structure even to the driving motor used in the motor driven power steering system.

Background technology of the present disclosure is disclosed in Korea Patent Laid-Open Publication No. 10-2020-0091651 (published on July 31, 2020, and entitled "REDUNDANCY CIRCUIT FOR ELECTRIC POWER STEERING SYSTEM").

US 2020/353975 A1 discloses an ECU including a plurality of control circuits which is configured to control driving of a motor and communicate each other. In the document it is described that the control circuits are configured to switch control modes including an ADS mode for controlling the driving of the motor based on a steering angle command θs* and a torque control mode for controlling the driving of the motor based on a torque command value, a first control circuit, which calculates an EPS current command value shared by the plurality of control circuits in an EPS mode, and a second control circuit, which calculates an ADS current command value shared by the plurality of control units in an ADS mode, are different.

EP 3 466 795 A1 discloses an electronic control device which includes at least two pairs of detection means and in which determination as to abnormality of the detection means is performed and, when an abnormality is detected, switching to a normal one of the pairs is performed and control is continued, the device allowing a time period taken until switching to the normal pair to be shortened and allowing reduction in load for a control process, an abnormality determination means performing detection of abnormality of one of the pairs of detection means at a normal speed, and performing detection of abnormality of the other of the pairs at a speed not higher than the normal speed, and, when a sign of abnormality of the detection means being detected at the normal speed, a CPU performing switching to the other normal pair and continues control, and the abnormality determination means performing detection of abnormality of the other normal pair at the normal speed, and meanwhile, continues to perform detection of abnormality of the abnormal pair at a speed not higher than the normal speed.

### SUMMARY

A motor driven power steering system may drive various actuators centered on an electronic control device, and thus require an independent redundancy structure as a demand for its safety and reliability further increases due to arrival of an autonomous driving era.

The invention is set out in the appended set of claims.

### BRIEF DESCRIPTION OF THE DRAWINGS

FIG. 1 is a block diagram showing a motor driven power steering system of a redundancy structure according to an embodiment of the present disclosure.
FIG. 2 is an exemplary diagram briefly showing arrangement of a position sensor in the motor driven power steering system of a redundancy structure according to an embodiment of the present disclosure.

### DETAILED DESCRIPTION OF THE ILLUSTRATED EMBODIMENTS

As is traditional in the corresponding field, some exemplary embodiments may be illustrated in the drawings in terms of functional blocks, units, and/or modules. Those of ordinary skill in the art will appreciate that these block, units, and/or modules are physically implemented by electronic (or optical) circuits such as logic circuits, discrete components, processors, hard-wired circuits, memory elements, wiring connections, and the like. When the blocks, units, and/or modules are implemented by processors or similar hardware, they may be programmed and controlled using software (e.g., code) to perform various functions discussed herein. Alternatively, each block, unit, and/or module may be implemented by dedicated hardware or as a combination of dedicated hardware to perform some functions and a processor (e.g., one or more programmed processors and associated circuitry) to perform other functions. Each block, unit, and/or module of some exemplary embodiments may be physically separated into two or more interacting and discrete blocks, units, and/or modules without departing from the scope of the inventive concept. Further, blocks, units, and/or module of some exemplary embodiments may be physically combined into more complex blocks, units, and/or modules without departing from the scope of the inventive concept.

The embodiments described in this specification may be implemented with a method or process, a device, a software program, a data stream or a signal, for example. Although a feature is discussed only in a single context (for example, discussed only in a method), the discussed feature can be implemented in another type (for example, apparatus or program). An apparatus may be implemented in suitable hardware, software or firmware. The method can be implemented in a device such as a processor which generally refers to a processing device including a computer, a microprocessor, an integrated circuit or a programmable logic device. The processor also includes a communication device, such as a computer, cellular phone, PDA (Personal Digital Assistant) and another device, which facilitates information communication between end users. Hereinafter, a motor driven power steering system of a redundancy structure will be described below with reference to the accompanying drawings through various embodiments.

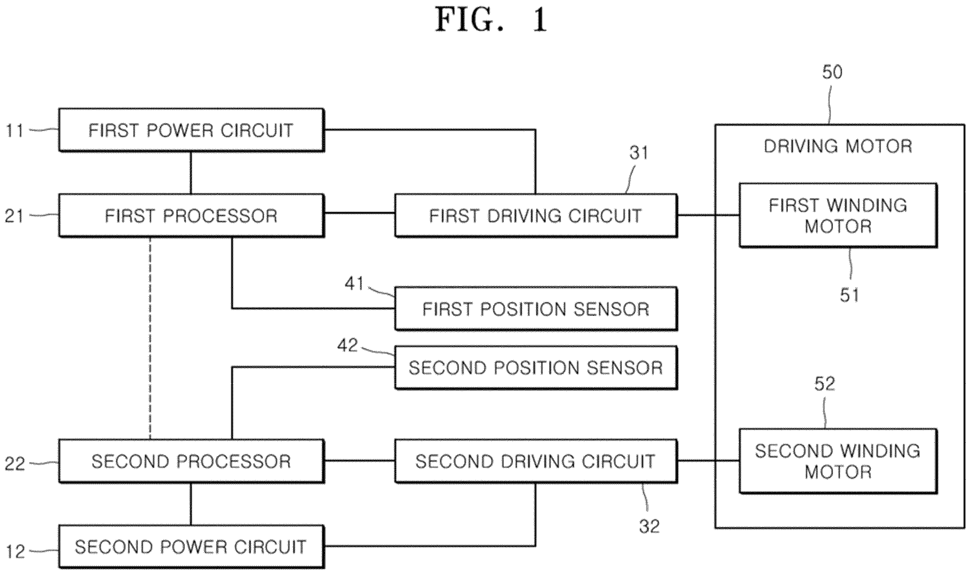

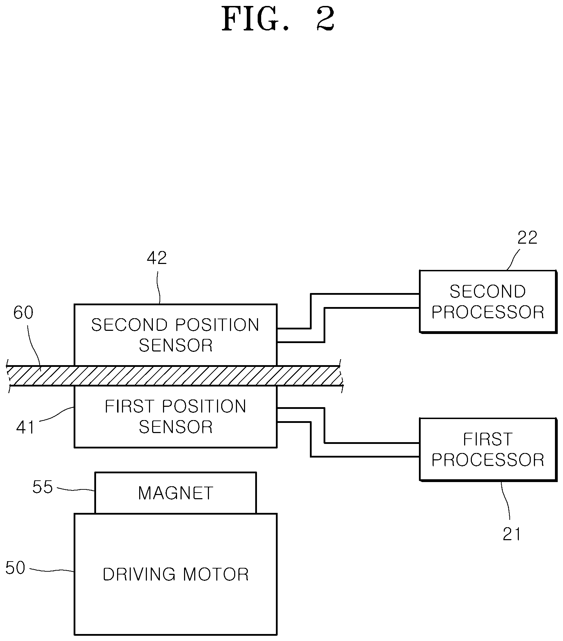

FIG. 1 is a block diagram showing a motor driven power steering system of a redundancy structure according to an embodiment of the present disclosure; and FIG. 2 is an exemplary diagram briefly showing arrangement of a position sensor in the motor driven power steering system of a redundancy structure according to an embodiment of the present disclosure.

As shown in FIG. 1, the motor driven power steering system of a redundancy structure according to an embodiment of the present disclosure includes a driving motor 50, first and second power circuits 11 and 12, and first and second driving circuits 31 and 32, first and second position sensors 41 and 42, and first and second processors 21 and 22.

The driving motor 50 is be a driving actuator of the motor driven power steering system, and substantially rotate and steer a steering wheel (not shown).

Here, the driving motor 50 may be a double winding motor that outputs one power but includes a first winding motor 51 and a second winding motor 52 therein, and have a redundancy structure in which the driving motor 50 is driven through control means independent from each other.

Accordingly, the first winding motor 51 may be operatively coupled to the first power circuit 11, the first position sensor 41, the first driving circuit 31, and the first processor 21; and the second winding motor 52 may be operatively coupled to the second power circuit 12, the second position sensor 42, the second driving circuit 32, and the second processor 22.

The first and second power circuits 11 and 12 may respectively supply control power and driving power to the first and second processors 21 and 22 and the first and second driving circuits 31 and 32, independently from each other.

The first and second driving circuits 31 and 32 may respectively vary a frequency of the three-phase power supply based on control signals of the first and second processors 21 and 22 to adjust the speed and torque of the first winding motor 51 and the second winding motor 52 of the driving motor 50, thereby independently driving the driving motor 50.

Here, the first and second driving circuits 31 and 32 may each include at least one phase switch, including an inverter, which converts direct current (DC) driving power to the three-phase power supply, and at least one cut-off switch completely which cuts off the three-phase power supply when a failure occurs therein.

In this case, the phase switch and the cut-off switch may be a power semiconductor device such as a metal-oxide-semiconductor field-effect transistor (MOSFET)/insulated gate bipolar transistor (IGBT).

The first and second position sensors 41 and 42 each detect a rotational position of the driving motor 50 to output a position signal and a comparison signal, thereby comparing and verifying whether a measured value is normal.

Here, the first and second position sensors 41 and 42 may be respectively mounted on positions corresponding to those of the lower surface and upper surface of one circuit board 60 as shown in FIG. 2.

Here, the first position sensor 41, the circuit board 60, and the second position sensor 42 may be sequentially arranged in a magnetic flux direction (i.e., z-axis direction) of a position detection magnet 55 positioned in the driving motor 50, and the first position sensor 41 and the second position sensor 42 may thus be robust against an external magnetic field.

Accordingly, the first position sensor 41 transmits to the first processor 21, each of a first position signal for detecting position of the magnet 55 and a first comparison signal for monitoring and comparing whether the first position signal is normal; and the second position sensor 42 transmits to the second processor 22, each of a second position signal for detecting the position of the magnet 55 and a second comparison signal for monitoring and comparing whether the second position signal is normal.

The first and second processors 21 and 22 are operatively coupled to the driving motor 50, the first and second power circuits 11 and 12, the first and second position sensors 41 and 42, and the first and second driving circuits 31 and 32, respectively.

Accordingly, the first processor 21 receives a steering control signal from an upper-level control device to allow the first driving circuit 31 to be operated based on the first position sensor 41, thereby allowing the first winding motor 51 of the driving motor 50 to be operated.

In addition, the second processor 22 receives a steering control signal from the upper control device independently from the first processor 21 to allow the second driving circuit 32 to be operated based on the second position sensor 42, thereby allowing the second winding motor 52 of the driving motor 50 to be operated.

Here, the first processor 21 stops its operation when a tolerance between the first position signal and the first comparison signal is out of a predetermined first reference error as a result of the comparison of the two signals; and the second processor 22 stops its operation when a tolerance between the second position signal and the second comparison signal is out of a predetermined second reference error as a result of the comparison of the two signals. Accordingly, any one processor may allow the driving motor 50 to be operated to enable the steering unless the error occurs in both the first position sensor 41 and the second position sensor 42. The first reference error and the second reference error may be the same or different from each other based on a system environment.

Meanwhile, one processor takes a main control and allows the driving motor 50 to be operated while the first and second processors 21 and 22 monitor their mutual operation states, and the main control is switched to the other processor when the error occurs, and the other processor is driven to allow the driving motor 50 to be operated.

As described above, according to the motor driven power steering system of a redundancy structure according to an embodiment of the present disclosure, the position sensor, driving circuit, processor, and power supply of the driving motor for redundant driving of the motor driven power steering system may each have the redundancy structure to be driven independently from each other, and the driving motor may thus be allowed to be operated by the other independent processor even when one processor fails, thereby securing stability of the processor and robustness of the position sensor against the external magnetic field.

The implementation described herein may be implemented in, for example, a method or process, an apparatus, a software program, a data stream, or a signal. Although implementation is disclosed only in a single form (e.g., only as a method), the implementation of the disclosed feature may also be implemented in another form (e.g., as an apparatus or program). The apparatus may be implemented in suitable hardware, software, firmware, or the like. For example, the method may be implemented in the apparatus such as a processor which generally refers to a computer, a micro-processor, a processing device including an integrated circuit, a programmable logic device or the like, etc. The processor may also include a communication device such as a computer, a mobile phone, a portable/personal digital assistant ("PDA") or another device, which facilitates communications of information between end-users.

As set forth above, according to the motor driven power steering system of a redundancy structure according to the embodiments of the present disclosure, the position sensor, driving circuit, processor, and power supply of the driving motor for the redundant driving of the motor driven power steering system may each have the redundancy structure to be driven independently from each other, and the driving motor may thus be allowed to be operated by the other independent processor even when one processor fails, thereby securing the stability of the processor and the robustness of the position sensor against the external magnetic field.

## Claims

1. A motor driven power steering system of a redundancy structure, the system comprising:
a driving motor (50) configured to drive a steering wheel;
first and second driving circuits (31, 32) configured to drive the driving motor (50);
first and second position sensors (41, 42) configured to detect a rotational position of the driving motor (50); and
first and second processors (21, 22),
wherein the first processor (21) is configured to receive a steering control signal from an upper-level control device to allow the first driving circuit (31) to be operated based on the first position sensor (41), thereby allowing the driving motor (50) to be operated, and
the second processor (22) is configured to receive a steering control signal from the upper-level control device to allow the second driving circuit (32) to be operated based on the second position sensor (42), thereby allowing the driving motor (50) to be operated,
wherein the first position sensor (41) is configured to transmit each of a first position signal and a first comparison signal to the first processor (21), and the second position sensor (42) is configured to transmit each of a second position signal and a second comparison signal to the second processor (22),
wherein the first processor (21) is configured to stop its operation when a tolerance between the first position signal and the first comparison signal is out of a predetermined first reference error as a result of comparison of the two signals, and the second processor (22) is configured to stop its operation when a tolerance between the second position signal and the second comparison signal is out of a predetermined second reference error as a result of comparison of the two signals, and
wherein the first and second processors (21, 22) are configured to monitor their mutual operation states, one processor is configured to take a main control and allow the driving motor (50) to be operated while the first and second processors (21, 22) monitor their mutual operation states, and the main control is switched to the other processor when the error occurs, and the other processor is configured to allow the driving motor (50) to be operated.

2. The system of claim 1, wherein the first position sensor (41) and the second position sensor (42) are respectively mounted on positions corresponding to those of the lower surface and upper surface of one circuit board.

3. The system of claim 2, wherein the first position sensor (41), the circuit board, and the second position sensor (42) are sequentially arranged in one magnetic flux direction of a position detection magnet positioned in the driving motor (50).

4. The system of claim 1, further comprising:
first and second power circuits (11, 12) configured to supply control power, wherein the first and second processors (21, 22) are operatively coupled to the driving motor (50), the first and second power circuits (11, 12), the first and second position sensors (41, 42), and the first and second driving circuits (31, 32), respectively.

5. The system of any one of claims 1 to 4, wherein the driving motor (50) is a double winding motor including a first winding motor (51) and a second winding motor (52).

6. The system of claim 5, wherein the first winding motor (51) is operatively coupled to the first power circuit (11), the first position sensor (41), the first driving circuit (31), and the first processor (21), and
the second winding motor (52) is operatively coupled to the second power circuit (12), the second position sensor (42), the second driving circuit (32), and the second processor (22).

7. The system of any one of claims 1 to 6, wherein the first and second driving circuits (31, 32) each include at least one phase switch configured to convert direct current (DC) driving power to a three-phase power supply, and at least one cut-off switch configured to completely cut off the three-phase power supply when a failure occurs therein.

8. The system of claim 7, wherein:
the first winding motor (51) is operatively coupled to the first position sensor (41), the first driving circuit (31), and the first processor (21), and
the second winding motor (52) is operatively coupled to the second position sensor (42), the second driving circuit (32), and the second processor (22).

## Patentansprüche

1. Motorgetriebenes Servolenkungssystem mit einer Redundanzstruktur, wobei das System umfasst:
einen Antriebsmotor (50), der zum Antrieb eines Lenkrads eingerichtet ist;
erste und zweite Antriebsschaltungen (31, 32), die zum Antrieb des Antriebsmotors (50) eingerichtet sind;
erste und zweite Positionssensoren (41, 42), die dazu eingerichtet sind, eine Drehposition des Antriebsmotors (50) zu erfassen; und
einen ersten und einen zweiten Prozessor (21, 22),
wobei der erste Prozessor (21) dazu eingerichtet ist, ein Lenksteuersignal von einer übergeordneten Steuervorrichtung zu empfangen, um zu ermöglichen, dass die erste Antriebsschaltung (31) basierend auf dem ersten Positionssensor (41) betrieben wird, wodurch ermöglicht wird, dass der Antriebsmotor (50) betrieben wird, und
der zweite Prozessor (22) dazu eingerichtet ist, ein Lenksteuersignal von der übergeordneten Steuervorrichtung zu empfangen, um zu ermöglichen, dass die zweite Antriebsschaltung (32) basierend auf dem zweiten Positionssensor (42) betrieben wird, wodurch ermöglicht wird, dass der Antriebsmotor (50) betrieben wird,
wobei der erste Positionssensor (41) dazu eingerichtet ist, jedes von einem ersten Positionssignal und einem ersten Vergleichssignal an den ersten Prozessor (21) zu senden, und der zweite Positionssensor (42) dazu eingerichtet ist, jedes von einem zweiten Positionssignal und einem zweiten Vergleichssignal an den zweiten Prozessor (22) zu senden,
wobei der erste Prozessor (21) dazu eingerichtet ist, seinen Betrieb anzuhalten, wenn eine Toleranz zwischen dem ersten Positionssignal und dem ersten Vergleichssignal als Ergebnis des Vergleichs der zwei Signale außerhalb eines vorgegebenen ersten Referenzfehlers liegt, und der zweite Prozessor (22) dazu eingerichtet ist, seinen Betrieb anzuhalten, wenn eine Toleranz zwischen dem zweiten Positionssignal und dem zweiten Vergleichssignal als Ergebnis des Vergleichs der zwei Signale außerhalb eines vorgegebenen zweiten Referenzfehlers liegt, und
wobei der erste und der zweite Prozessor (21, 22) dazu eingerichtet sind, ihre gegenseitigen Betriebszustände zu überwachen, ein Prozessor dazu eingerichtet ist, eine Hauptsteuerung zu übernehmen und zu ermöglichen, dass der Antriebsmotor (50) betrieben wird, während der erste und der zweite Prozessor (21, 22) ihre gegenseitigen Betriebszustände überwachen, und die Hauptsteuerung auf den anderen Prozessor umgeschaltet wird, wenn der Fehler auftritt, und der andere Prozessor dazu eingerichtet ist, zu ermöglichen, dass der Antriebsmotor (50) betrieben wird.

2. System nach Anspruch 1, wobei der erste Positionssensor (41) und der zweite Positionssensor (42) jeweils an Positionen montiert sind, die denen der Unterseite und der Oberseite einer Leiterplatte entsprechen.

3. System nach Anspruch 2, wobei der erste Positionssensor (41), die Leiterplatte und der zweite Positionssensor (42) nacheinander in einer magnetischen Flussrichtung eines im Antriebsmotor (50) positionierten Positionserfassungsmagneten angeordnet sind.

4. System nach Anspruch 1, weiterhin umfassend:
erste und zweite Stromschaltungen (11, 12), die zur Bereitstellung von Steuerstrom eingerichtet sind,
wobei der erste und der zweite Prozessor (21, 22) betriebsmäßig jeweils mit dem Antriebsmotor (50), der ersten und der zweiten Stromschaltung (11, 12), dem ersten und dem zweiten Positionssensor (41, 42) und der ersten und der zweiten Antriebsschaltung (31, 32) gekoppelt sind.

5. System nach einem der Ansprüche 1 bis 4, wobei der Antriebsmotor (50) ein Doppelwicklungsmotor ist, der einen ersten Wicklungsmotor (51) und einen zweiten Wicklungsmotor (52) umfasst.

6. System nach Anspruch 5, wobei der erste Wicklungsmotor (51) betriebsmäßig mit der ersten Stromschaltung (11), dem ersten Positionssensor (41), der ersten Antriebsschaltung (31) und dem ersten Prozessor (21) gekoppelt ist, und
der zweite Wicklungsmotor (52) betriebsmäßig mit der zweiten Stromschaltung (12), dem zweiten Positionssensor (42), der zweiten Antriebsschaltung (32) und dem zweiten Prozessor (22) gekoppelt ist.

7. System nach einem der Ansprüche 1 bis 6, wobei die erste und die zweite Antriebsschaltung (31, 32) jeweils zumindest einen Phasenschalter, der dazu eingerichtet ist, einen Gleichstrom-, DC, Antriebsstrom in eine dreiphasige Stromversorgung umzuwandeln, und zumindest einen Trennschalter umfassen, der dazu eingerichtet ist, die dreiphasige Stromversorgung vollständig zu unterbrechen, wenn darin ein Fehler auftritt.

8. System nach Anspruch 7, wobei:
der erste Wicklungsmotor (51) betriebsmäßig mit dem ersten Positionssensor (41), der ersten Antriebsschaltung (31) und dem ersten Prozessor (21) gekoppelt ist, und
der zweite Wicklungsmotor (52) betriebsmäßig mit dem zweiten Positionssensor (42), der zweiten Antriebsschaltung (32) und dem zweiten Prozessor (22) gekoppelt ist.

## Revendications

1. Système de direction assistée motorisé d'une structure redondance, le système comprenant:
un moteur d'entraînement (50) conçu pour entraîner un volant;
des premier et deuxième circuits de commande (31, 32) conçus pour entraîner le moteur d'entraînement (50) ;
des premier et deuxième capteurs de position (41, 42) conçus pour détecter une position de rotation du moteur d'entraînement (50); et
des premier et deuxième processeurs (21, 22),
dans lequel le premier processeur (21) est configuré pour recevoir un signal de commande de direction d'un dispositif de commande de niveau supérieur afin de permettre au premier circuit de commande (31) d'être activé sur la base du premier capteur de position (41), permettant ainsi le fonctionnement du moteur d'entraînement (50), et
le deuxième processeur (22) est configuré pour recevoir un signal de commande de direction du dispositif de commande de niveau supérieur afin de permettre au deuxième circuit de commande (32) d'être activé sur la base du deuxième capteur de position (42), permettant ainsi le fonctionnement du moteur d'entraînement (50),
dans lequel le premier capteur de position (41) est conçu pour transmettre un premier signal de position et un premier signal de comparaison au premier processeur (21), et le second capteur de position (42) est conçu pour transmettre un deuxième signal de position et un deuxième signal de comparaison au deuxième processeur (22),
dans lequel le premier processeur (21) est configuré pour arrêter son fonctionnement lorsqu'une tolérance entre le premier signal de position et le premier signal de comparaison est en dehors d'une première erreur de référence prédéterminée à la suite de la comparaison des deux signaux, et le deuxième processeur (22) est configuré pour arrêter son fonctionnement lorsqu'une tolérance entre le deuxième signal de position et le deuxième signal de comparaison est en dehors d'une deuxième erreur de référence prédéterminée à la suite de la comparaison des deux signaux, et
dans lequel les premier et deuxième processeurs (21, 22) sont configurés pour surveiller réciproquement leurs états de fonctionnement, un processeur est configuré pour prendre une commande principale et permettre au moteur d'entraînement (50) de fonctionner pendant que les premier et deuxième processeurs (21, 22) surveillent réciproquement leurs états de fonctionnement, et la commande principale est commutée à l'autre processeur lorsque l'erreur se produit, et l'autre processeur est configuré pour permettre au moteur d'entraînement (50) de fonctionner.

2. Système selon la revendication 1, dans lequel le premier capteur de position (41) et le deuxième capteur de position (42) sont respectivement montés à des positions correspondant à celles de la surface inférieure et de la surface supérieure d'une carte de circuit imprimé.

3. Système selon la revendication 2, dans lequel le premier capteur de position (41), la carte de circuit imprimé et le deuxième capteur de position (42) sont disposés séquentiellement dans un sens du flux magnétique d'un aimant de détection de position positionné dans le moteur d'entraînement (50).

4. Système selon la revendication 1, comprenant en outre:
un premier et un deuxième circuits d'alimentation (11, 12) conçus pour fournir une puissance de commande,
dans lequel les premier et deuxième processeurs (21, 22) sont couplés fonctionnellement au moteur d'entraînement (50), aux premier et deuxième circuits d'alimentation (11, 12), aux premier et deuxième capteurs de position (41, 42), et aux premier et au deuxième circuits de commande (31, 32), respectivement.

5. Système selon l'une quelconque des revendications 1 à 4, dans lequel le moteur d'entraînement (50) est un moteur à double enroulement comprenant un premier moteur à enroulement (51) et un deuxième moteur à enroulement (52).

6. Système selon la revendication 5, dans lequel le premier moteur à enroulement (51) est couplé fonctionnellement au premier circuit d'alimentation (11), au premier capteur de position (41), au premier circuit de commande (31) et au premier processeur (21), et
le deuxième moteur d'enroulement (52) est couplé fonctionnellement au deuxième circuit d'alimentation (12), au deuxième capteur de position (42), au deuxième circuit d'entraînement (32) et au deuxième processeur (22).

7. Système selon l'une quelconque des revendications 1 à 6, dans lequel les premier et deuxième circuits de commande (31, 32) comprennent chacun au moins un commutateur de phase conçu pour convertir la puissance de commande à courant continu (CC) en une alimentation triphasée, et au moins un commutateur de coupure conçu pour couper complètement l'alimentation triphasée en cas de défaillance de celle-ci.

8. Système selon la revendication 7, dans lequel:
le premier moteur à enroulement (51) est couplé fonctionnellement au premier capteur de position (41), au premier circuit de commande (31) et au premier processeur (21), et
le deuxième moteur à enroulement (52) est couplé fonctionnellement au deuxième capteur de position (42), au deuxième circuit de commande (32) et au deuxième processeur (22).
